# EUROPEAN PATENT SPECIFICATION

(11) **EP 2 440 830 B1**
(45) Date of publication and mention of the grant of the patent: **23.10.2019**
(21) Application number: 10740497.2
(22) Date of filing: 10.06.2010
(51) Int. Cl.: F16M 7/00, A47B 91/02, D06F 39/12

(54) **LEVELING FEET FOR HOUSEHOLD APPLIANCES**
STELLFÜSSE FÜR HAUSHALTSGERÄTE
PIEDS DE MISE À NIVEAU POUR APPAREILS MÉNAGERS

(30) Priority: 10.06.2009 BR MU8901408 U
(43) Date of publication of application: 18.04.2012
(73) Proprietor: Electrolux Do Brasil S.A., 81.520-900 Curitiba -PR (BR)
(72) Inventor: AMARAL, Gustavo Gnoatto, Curitiba PR, CEP 81670-100 (BR); DAVIN, Adriano, 82.530-030 Curitiba - PR (BR); PAGNOZZI, Rodrigo Marge, 82.520-130 Curitiba - PR (BR)
(74) Representative: Electrolux Group Patents
(86) International application number: PCT/BR2010/000195
(87) International publication number: WO 2010/142010

(56) References cited:
- WO-A1-00/45671
- US-A- 901 636
- US-A- 3 455 526
- US-B1- 6 520 461

## Description

### Field of the Invention

This invention belongs to the to the mechanic engineering field, specifically the electromechanical devices usually known by household appliances, exactly fridges, freezers and similar devices referring to the leveling devices applied to the bottom of the household appliances.

### Background of the Application

Several equipments have devices to level horizontally said equipment in respect to the surface, in view of the small imperfections or variations on the surface supporting it. The act to level is intended to generate a horizontal reference plane to adjust the variations between the equipment plane and the surface supporting it.

Usually, said leveling devices are place on the lower surface of equipments and fasten to the structure or also fasten to the additional structures interacting with the household appliance and providing the variation on the height of the fastening points in respect to the surface supporting it. This enables compensating eventual differences resulting from the irregularities or variations on said surface level.

Therefore, it is unavoidable that the leveling device characteristic is the possibility of adjusting and regulating the height it provides to the equipment in respect to the surface, which could have different and variable irregularities.

Specifically, regarding the household appliances, the leveling devices refers to the very support feet which have the height adjustment and enables the desired leveling of the device being adjusted by user.

Frequently, such feet are used together with castors associated to the leveling, to move easily the household appliance. Said castors basically comprise the wheels or hinged cylinders enabling the free movement of the device on the relatively flat surface.

It is observed the state-of-arts in the household appliances that in some variations, the leveling is made by adjusting the product height in respect to its castors other then removing them from the surface contact. Therefore, it is unavoidable that there is any lock type to prevent the undesired movement of the household appliance. The difficulty is to have the leveling device associated to the castor and providing the chance of moving and locking the household appliance, according to the user need, and the change of leveling it in a practical and safe way, by the compact device.

### Analysis of the State of Art

CA 2467568 documents reveals the platform adjustable set to raise the device and includes the platform with several vertical foot parts apart. Each part of the foot has the first assembly opening to fasten the device to the platform and the second assembly opening to fasten the adjustable castor to the foot. Consumer could adjust the platform set to the desired height by changing the castors height.

Model MU706532-3 is characterized by providing the placement on the side structural plates of the equipment where the aligned cuts and folding and inversely symmetric are made and adapting the pair of round border angle turned inside to each castor and actuating as the positioning elements cooperating with the sliding groove to the rectangular plate of the superior base of castors and presenting the hole to fasten the screws to the structure strip.

Patent US5971408 exposes the wheels set adjusted vertically to support the cabinet or similar in a movable way on the support surface, which includes the body, the support, wheel, adjustment rod, adjustment screw and several lengthened parts of the set. The wheel is defined by the pair of separate rolls, which are interconnected by the portion reduced diametrically. The arrangement represents a vertically adjustable set very compact of the wheel, which could be previously assembled and connected to the fridge cabinet.

Document DE 202004017329 describes a height adjuster foot applied to a household appliance, particularly a fridge which comprises as threaded axis with low plate and endless wheel, which couple the axis and the endless gear to the wheel and fastened to the movement axis.

Document US597135 exposes the height adjustment mechanism at least one part of the article, for instance, the household appliance such as a fridge or a dishwasher machine. The device includes two parts and is adjusted to replace at lest one front foot of the device. The first part of the device is the manual wheel with enlarged diameter to be rotated by user. The manual wheel is fastened by captive nut in the rotation device increasing or reducing the device height. The second piece is the disk fastened in the manual wheel but contacting the surface.

WO 00/45671 discloses a foot having an inner body with aroller and an outer body. The inner and outer bodies are threaded and moveable with relation to each other.

### Brief Description of the Application

This invention describes the leveling feet with the embedded castors allowing the household appliance movement and making easier the handling which setting avoids the undesirable disassemble of the devices parts and components.

This allows the leveling by the plastic thread, by removing the castor contacting the surface in order to compensate possible irregularity in the surface and fasten the product, thus inhibiting the unexpected movements and ensuring the equipment stability.

Although the foot is totally unthreaded in the attempt to level the equipment, the device is not loosen in view of the set embedded lock system.

It also has a metallic base for support and fastening to the household appliances, which optionally could not be used, and the set is directly fasten to the household appliance.

The building arrangements described above provide several advantages such as the best stability to the household appliance, in view of the possible lock of the displacement provided by the leveling foot; the building facility in view of the lower quantity of parts; the easy handling of the movement of the household appliance; easy adjustment of the leveling foot height; the guarantee of the invention set integrity during the level adjustment.

### Description of Drawings

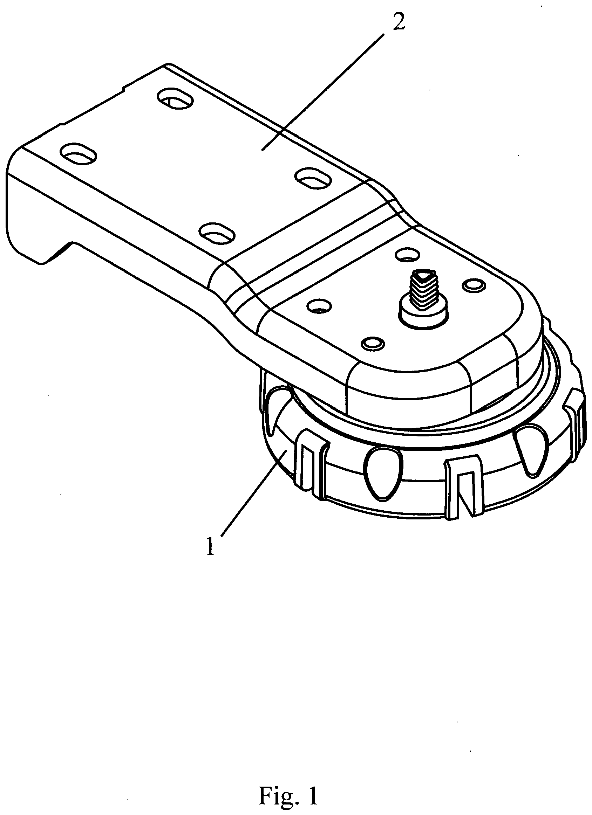

Figure 1 illustrates a perspective view of the device set evidencing the perspective view of the external ring (1) and the base (2) supporting the household appliance.

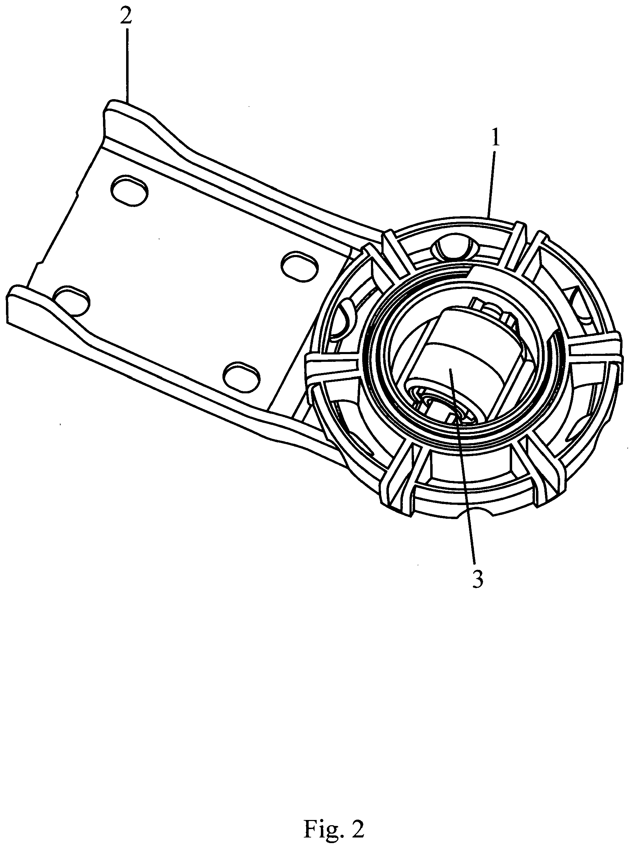

Figure 2 illustrates perspective view of the lower part of the set evidencing the external ring (1), the base (2) and the castor (3).

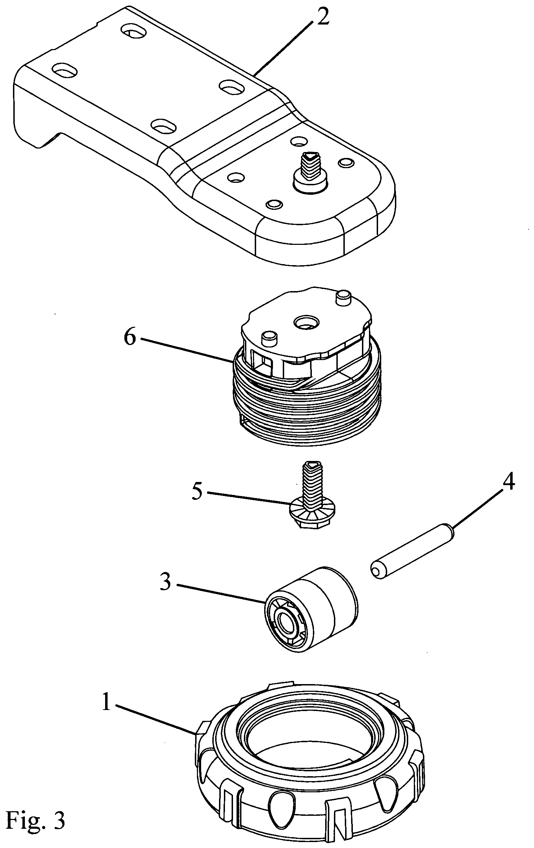

Figure 3 illustrates an exploded view of the leveling foot set evidencing its components parties: the external ring (1), the base (2), the castor (3), the axle (4) of castor (3), the vertical axle (5) which is a screw in the presented setting, and the internal ring (6);

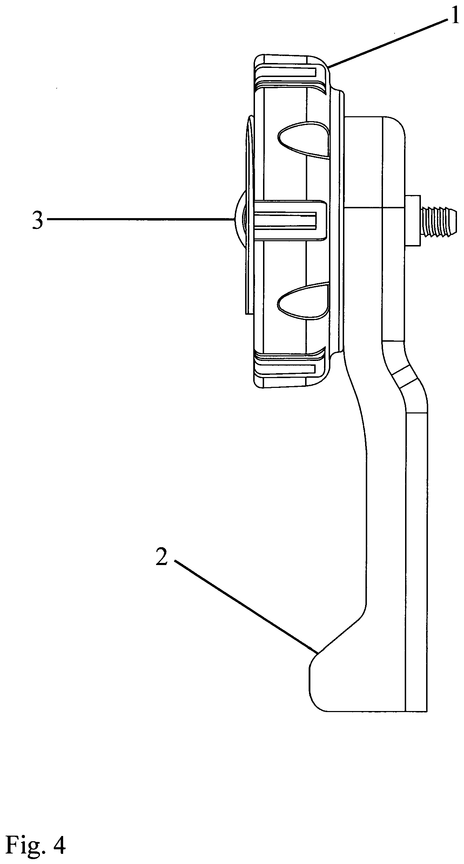

Figure 4 illustrates a side view of the leveling foot set evidencing the external ring (1), the base (2) and castor (3).

### Detailed Description of the Solution

This invent comprises the leveling feet with embedded castors (3) for use in household appliances which intent is provide the household appliances leveling in respect to the supporting surface. This is performed upon the separate adjustment of each leveling foot height in order to compensate eventual irregularity and variations of surface where the household appliance is placed.

Said leveling foot allows adjusting the height by the interaction between the external ring (1) and the internal ring thread (6), this fasten to the device structure or in a base (2), raising or lowering the equipment according to the user need. In the internal ring (6), there is a frame, which does not allow the total removal of the external ring (1), preventing the involuntary disassembly of the set. Such frame has the rebound interrupting the thread and creating the obstacle to the passage of the external ring (1). In the preferably setting, the set comprises a metallic base (2), optionally plastic or other material, supporting the leveling foot. Alternatively, the leveling foot should comprise the external ring (1), internal ring (6) and castor (3) fastened directly to the equipment, that is, without using the fastening base (2).

The internal ring (6) has a tubular format and contains the grooves in the external surface that makes a thread for the interaction with an external ring (1) and has inside a support for the castor (3).

In one modality, the leveling foot fits the base (2) in a specific format hole and is positioned therein by small rebound and fastened by the vertical axle (5), which is a screw in this setting.

The associated castor (3) contains the axle in which ends the intended projections are fit and positioned internally in the internal ring (6) therefore characterizing the embedded castor (3).

Alternatively, the castor (3) could be fastened in the auxiliary part, included in the internal ring (6), and rotated by the vertical axle (5), so as said castor (3) could rotate (in addition to rotating in its own axle) together with the auxiliary part, around the vertical axle (5), and allowing the equipment movement in any direction during the displacement.

It also has an external ring (1) moving vertically on the external part of the thread of the tubular part, delimiting the height where the base (2) is supported, and therefore enabling the household appliance leveling smoothly in view of the small ration step/diameter.

The base (2) has a substantially rectangular format liable of other plurality of forms, and rebound in the front part. The center position of said rebound comprises a hole receiving the vertical axle (5), which is a screw in said setting, to fasten the internal ring (6). Such setting allows the insertion of the castor (3) in the internal ring (6), if inserted in the specific supports and remain embedded during the use.

## Claims

1. Leveling feet for household appliances comprising a castor (3) embedded in an internal ring (6), said internal ring (6) being of tubular format and with grooves, in thread format on the external surface, an external ring (1) provided with internal grooves, in thread format, to interact with the internal ring (6), **characterized by** a frame in the internal ring (6) preventing the removal of the external ring (1), such frame has a rebound interrupting the thread and creating an obstacle to the passage of the external ring (1)

2. Leveling feet for household appliances according to claim 1,
**characterized by** a variable height proportional to the threading positioning between the internal ring (6) and the external ring (1).

3. Leveling feet for household appliances according to claim 1 or 2,
**characterized by** a base (2) for cooperating with a household appliance.

4. Leveling feet for household appliances according to any of the preceding claims **characterized by** the castor (3) is arranged to be rotated by the vertical axle (5).

5. Household appliance, **characterized in that** the appliance comprises a leveling feet set according to claim 1.

## Patentansprüche

1. Stellfüße für Haushaltsgeräte, umfassend eine in einem Innenring (6) eingebettete Rolle (3), wobei der Innenring (6) in einer röhrenförmigen Gestalt und mit Nuten in Gewindeform auf der Außenfläche vorliegt, einen mit Innennuten versehenen Außenring (1) in Gewindeform zum Interagieren mit dem Innenring (6), **gekennzeichnet durch** einen Rahmen in dem Innenring (6), der das Entfernen des Außenrings (1) verhindert, wobei solch ein Rahmen einen Rücksprung aufweist, der das Gewinde unterbricht und ein Hindernis für das Passieren des Außenrings (1) bildet.

2. Stellfüße für Haushaltsgeräte nach Anspruch 1, **gekennzeichnet durch** eine variable Höhe proportional zu der Gewindepositionierung zwischen dem Innenring (6) und dem Außenring (1).

3. Stellfüße für Haushaltsgeräte nach Anspruch 1 oder 2,
**gekennzeichnet durch** eine Basis (2) zum Zusammenwirken mit einem Haushaltsgerät.

4. Stellfüße für Haushaltsgeräte nach einem der vorhergehenden Ansprüche, **dadurch gekennzeichnet, dass** die Rolle (3) zum Drehen durch die vertikale Achse (5) angeordnet ist.

5. Haushaltsgerät, **dadurch gekennzeichnet, dass** das Gerät Stellfüße nach Anspruch 1 umfasst.

## Revendications

1. Pied de mise à niveau pour appareils ménagers comprenant une roulette (3) incorporée dans une bague interne (6), ladite bague interne (6) ayant un format tubulaire et présentant des gorges, dans un format fileté, sur la surface extérieure, une bague externe (1) pourvue de gorges internes, dans un format fileté, destinée à coopérer avec la bague interne (6), **caractérisé par** un cadre dans la bague interne (6) empêchant l'enlèvement de la bague externe (1), ledit cadre ayant un rebond interrompant le filetage et créant un obstacle au passage de la bague externe (1).

2. Pied de mise à niveau pour appareils ménagers selon la revendication 1, **caractérisé par** une hauteur variable proportionnelle au positionnement du filetage entre la bague interne (6) et la bague externe (1).

3. Pied de mise à niveau pour appareils ménagers selon la revendication 1 ou 2, **caractérisé par** une base (2) destinée à coopérer avec un appareil ménager.

4. Pied de mise à niveau pour appareils ménagers selon l'une quelconque des revendications précédentes, **caractérisé en ce que** la roulette (3) est prévue pour être tournée par l'axe vertical (5) .

5. Appareil ménager, **caractérisé en ce que** l'appareil comprend un ensemble de pieds de mise à niveau selon la revendication 1.
